# NEUE EUROPÄISCHE PATENTSCHRIFT

(11) **EP 2 824 362 B2**
(45) Veröffentlichungstag und Bekanntmachung des Hinweises auf die Entscheidung über den Einspruch: **06.03.2019**
(45) Hinweis auf die Patenterteilung: 20.01.2016
(21) Anmeldenummer: 13003530.6
(22) Anmeldetag: 12.07.2013
(51) Int. Cl.: F16F 15/173

(54) **Drehschwingungsdämpfer**
Torsional vibration damper
Amortisseur de vibrations de torsions

(43) Veröffentlichungstag der Anmeldung: 14.01.2015
(73) Patentinhaber: Vibracoustic GmbH, 64293 Darmstadt (DE)
(72) Erfinder: Wick, Alexander, 79423 Heitersheim (DE); Koch, Ernst, 79415 Bad Bellingen (DE); Glass, Martin, 76540 Loerrach (DE)
(74) Vertreter: Flügel Preissner Schober Seidel

(56) Entgegenhaltungen:
- DE-A1- 10 135 910
- DE-B- 1 101 870
- GB-A- 736 808
- GB-A- 858 739
- GB-A- 1 460 381
- GB-A- 2 344 398
- GB-A- 2 387 881
- US-A- 3 792 683
- US-A- 5 749 269

## Beschreibung

### Technisches Gebiet

Die Erfindung betrifft einen Drehschwingungsdämpfer, umfassend ein Dämpfergehäuse mit einer ringkanalförmigen Arbeitskammer, die mit einem viskosen Dämpfungsmedium gefüllt ist, wobei in der Arbeitskammer ein in Umfangsrichtung frei beweglicher Schwungring angeordnet ist und wobei der Schwungring durch zumindest ein Gleitlager in der Arbeitskammer gelagert ist.

### Stand der Technik

Ein solcher Drehschwingungsdämpfer ist allgemein bekannt, zum Beispiel aus der EP 0 503 424 B1. Der vorbekannte Drehschwingungsdämpfer gelangt zusammen mit einer Riemenscheibe zur Anwendung, wobei das Dämpfergehäuse durch die Riemenscheibe und einen die Arbeitskammer verschließenden Deckel gebildet ist. Der Schwungring ist radial innenseitig und außenseitig sowie stirnseitig beiderseits durch jeweils ein Gleitlager in der mit dem viskosen Dämpfungsmedium gefüllten Arbeitskammer gelagert, wobei die Gleitlager aus einem Kunststoff bestehen und einen geringen Reibungswiderstand aufweisen.

Die Gleitlager werden jeweils separat hergestellt und montiert.

Dies erfordert hohe Kosten hinsichtlich Fertigung, Montage und Logistik.

GB 2 387 881 A beschreibt einen Drehschwingungsdämpfer, der ein Gleitlager aus gegossenem Nylon aufweist. US 5,749,269 A offenbart ein Drehschwingungsdämpfer, der zur Dämpfung von Torsionsschwingungen als auch radialen Schwingungen ausgelegt ist. GB 858 739 A beschreibt einen Drehschwingungsdämpfer, der ein nichtmetallisches Gleitlager aufweist.

### Darstellung der Erfindung

Der Erfindung liegt die Aufgabe zugrunde, einen Drehschwingungsdämpfer der eingangs genannten Art derart weiter zu entwickeln, dass er einen einfachen und teilearmen Aufbau aufweist sowie einfach und kostengünstig herstellbar ist.

Diese Aufgabe wird erfindungsgemäß mit den Merkmalen von Anspruch 1 gelöst. Auf vorteilhafte Ausgestaltungen nehmen die Unteransprüche Bezug.

Zur Lösung der Aufgabe ist es vorgesehen, dass das Gleitlager durch eine erste Beschichtung des Schwungrings gebildet ist, die dessen Oberfläche zumindest teilweise überdeckt. Die von der ersten Beschichtung nicht-überdeckte Oberfläche ist von einer zweiten Beschichtung überdeckt sein, wobei die zweite Beschichtung stärker als das Material, aus dem der Schwungring besteht, temperaturabhängig ihr Volumen verändert.

Hierbei ist von Vorteil, dass die erste Beschichtung, die das Gleitlager bildet, mit dem Schwungring eine vormontierbare Einheit bildet, so dass diese vormontierbare Einheit in einem Arbeitsgang in das Dämpfergehäuse eingesetzt werden kann.

Hydraulisch dämpfende Drehschwingungsdämpfer funktionieren durch eine Scherung des in der Arbeitskammer angeordneten Dämpfungsmediums.

Während der bestimmungsgemäßen Verwendung des Drehschwingungsdämpfers bewegt sich der Schwungring frei beweglich und relativ verdrehbar zum Dämpfergehäuse in der Arbeitskammer. Dadurch entsteht eine Wechselscherung des viskosen Dämpfungsmediums, die den Dämpfungseffekt bewirkt. Auf diese Weise wird mechanische Energie in Wärme umgewandelt, die über das den Schwungring umgebende Dämpfergehäuse abgeführt wird.

Nach einer vorteilhaften Ausgestaltung kann es vorgesehen sein, dass die erste Beschichtung den Schwungring zumindest radial innen und in axialer Richtung beiderseits im Wesentlichen klammerförmig umschließt. Radial innen ist die erste Beschichtung dann als Radiallager und in axialer Richtung beiderseits jeweils als Axiallager ausgebildet. Die beiden Axiallager können sich zum Beispiel vom Radiallager ausgehend bis in etwa ein Drittel der radialen Höhe des Schwungrings erstecken. Durch eine solche Ausgestaltung ist einerseits eine gute Lagerung des Schwungrings in der Arbeitskammer in radialer und axialer Richtung gewährleistet und andererseits steht ein ausreichend großer Dämpfungsspalt zwischen der Arbeitskammer und dem Schwungring für die Drehschwingungsdämpfung zur Verfügung.

Das Radiallager und die Axiallager können einstückig ineinander übergehend und materialeinheitlich ausgebildet sein. Die Herstellung des Drehschwingungsdämpfers ist dadurch vereinfacht, dass nur ein Werkstoff, aus dem Radiallager und Axiallager bestehen, in einem Arbeitsgang mit der Oberfläche des Schwungrings verbunden wird. Eine solche Verbindung kann zum Beispiel durch Anspritzen erfolgen.

Für Anwendungsfälle, in denen unterschiedliche Werkstoffe für Radiallager und Axiallager sinnvoll sind, zum Beispiel wegen stark unterschiedlichen mechanischen Belastungen, können diese auch aus voneinander abweichenden Werkstoffen bestehen.

Das Radiallager und/oder die Axiallager der ersten Beschichtung können jeweils zumindest eine Schmiermitteltasche aufweisen. Bevorzugt weisen das Radiallager und die Axiallager jeweils mehrere gleichmäßig in Umfangsrichtung verteilt angeordnete Schmiermitteltaschen auf, die sich in axialer Richtung über die gesamte axiale Breite der ersten Beschichtung erstrecken. Das Schmiermittel, mit dem die Schmiermitteltaschen gefüllt sind, wird durch das Dämpfungsmedium, das sich in der Arbeitskammer befindet, gebildet. Durch das in den Schmiermitteltaschen befindliche Schmiermittel wird die Reibung zwischen der ersten Beschichtung und dem Dämpfergehäuse reduziert, ebenso wie eine aus der Reibung resultierende unerwünscht große Erwärmung in den Lagerstellen.

In Abhängigkeit von den jeweiligen Gegebenheiten des Anwendungsfalles kann das Radiallager zum Beispiel acht oder zwölf gleichmäßig in Umfangsrichtung verteilt angeordnete Schmiermitteltaschen aufweisen. Durch die Vielzahl der Schmiermitteltaschen und durch die Erstreckung derselben über die gesamte axiale Breite der ersten Beschichtung, ist die Reibung nur gering. Daraus resultieren nur eine praktisch unbedeutende Erhöhung der Temperatur des Drehschwingungsdämpfers während des Betriebs sowie gleichbleibend gute Gebrauchseigenschaften während einer langen Gebrauchsdauer.

Das Dämpfungsmedium ist bevorzugt durch ein Silikonöl gebildet. Für die Verwendung in hydraulisch dämpfenden Drehschwingungsdämpfern haben Silikonöle den Vorteil, dass sie chemisch inert sind und dadurch mit potentiellen Reaktionspartnern nicht oder nur in verschwindend geringem Maße reagieren. Außerdem sind sie in einem großen Temperaturbereich stabil, bei ausreichend großer Schmierfähigkeit. Darüber hinaus sind sie alterungsbeständig.

Die von der ersten Beschichtung nicht-überdeckte Oberfläche ist von einer zweiten Beschichtung überdeckt. Bei Drehschwingungsdämpfern aus dem Stand der Technik ist häufig ein Steifigkeitsabfall über der Temperatur nachteilig. Das Dämpfungsmedium, insbesondere wenn es sich um Silikonöle handelt, verändert seine Viskosität über der Temperatur stark, was zu unerwünschten Änderungen der Gebrauchseigenschaften des Drehschwingungsdämpfers führt.

Durch die zweite Beschichtung der von der ersten Beschichtung nichtüberdeckten Oberfläche des Schwungrings kann diesem unerwünschten Effekt entgegengewirkt werden, weil die zweite Beschichtung in sehr viel stärkerem Maße als das Material, aus dem der Schwungring besteht, temperaturabhängig ihr Volumen verändert.

Die erste und die zweite Beschichtung können gemeinsam, ähnlich der umfassenden ersten Beschichtung, eine vollständige Ummantelung des Schwungrings bilden. Die Gleitlager und die zweite Beschichtung zur Temperaturkompensation sind dadurch ineinander übergehend ausgebildet.. Durch die vollständige Ummantelung des Schwungrings lässt sich die Güte der Temperaturkompensation leichter einstellen und dadurch verbessern.

Die von der ersten Beschichtung nicht-überdeckte Oberfläche oder die zweite Beschichtung begrenzen mit einer die Arbeitskammer begrenzenden Innenwand des Dämpfergehäuses einen mit dem Dämpfungsmedium gefüllten Dämpfungsspalt. Auf die Gebrauchseigenschaften des Drehschwingungsdämpfers haben im Wesentlichen die temperaturabhängige Viskosität des Dämpfungsmediums und die Größe des Dämpfungsspalts Einfluss. Da die Veränderung der Temperatur in der Arbeitskammer des Drehschwingungsdämpfers während der bestimmungsgemäßen Verwendung mit vernünftigem konstruktivem Aufwand praktisch nicht zu verhindern ist, ergibt sich daraus zwangsläufig eine entsprechende Veränderung der Viskosität des Dämpfungsmediums.

Gelangt eine zweite Beschichtung zur Anwendung, stellt sich durch die temperaturabhängige Änderung ihres Volumens die Größe des Dämpfungsspalts selbsttätig ein.

Die erste und die zweite Beschichtung können einstückig ineinander übergehend und materialeinheitlich ausgebildet sein. Der Drehschwingungsdämpfer hat dadurch einen teilearmen Aufbau und ist einfach und kostengünstig herstellbar.

Die erste und die zweite Beschichtung können aus polymeren Werkstoffen bestehen. Werkstoffe, aus denen die Beschichtungen bevorzugt bestehen, können zum Beispiel PA 66, PTFE oder POM sein. Diese Werkstoffe weisen eine gute Gleitfähigkeit auf und einen geringen abrasiven Verschleiß, was im Hinblick auf eine gute Funktion des Radiallagers und der Axiallager während einer langen Gebrauchsdauer von hervorzuhebendem Vorteil ist.
Die zweite Beschichtung kann aus einem elastomeren Werkstoff bestehen.

Die Elastomere sollten dabei resistent gegen Silikonöl sein und auch ein geringes Quellverhalten bezüglich Ölen haben.

Mit dieser Beschichtung kann man sehr variable Schichtdicken realisieren, die durch ihre Wärmeausdehnung den Spalt im Viscodämpfer in geeigneter Weise verändern können. Der variable Spalt kann als Auslegungsinstrument genutzt werden.

Als Werkstoffe können zum Beispiel AEM (Ethylen-Acrylat-Kautschuk), HNBR (Hydrierter Acrylnitril-Butadien-Kautschuk), FFKM (Per-Fluor-Kautschuk) oder FKM (Fluor-Kautschuk) zur Anwendung gelangen.

Die zuvor genannten Werkstoffe ermöglichen eine gute Temperaturkompensation, haben gute Gleiteigenschaften und eine gute Dämpfung bei Berührung der Innenseite des Dämpfergehäuses. Außerdem sind die Werkstoffe hoch-/tieftemperaturbeständig.

Die erste und/oder die zweite Beschichtung können den Schwungring unmittelbar anliegend umschließen. Das wird beispielsweise dadurch erreicht, dass die Werkstoffe, aus denen die erste und/oder die zweite Beschichtung bestehen, unmittelbar an die Oberfläche des Schwungrings angespritzt werden. Die Herstellung des Drehschwingungsdämpfers wird dadurch vereinfacht.

Zur Anbindung von gleitfähigen Werkstoffen an der Oberfläche des Schwungrings kann es vorgesehen sein, dass die erste und/oder die zweite Beschichtung mit dem Schwungring mittels eines Bindemittels verbunden sind.

Der Schwungring besteht bevorzugt aus einem metallischen Werkstoff. Bezogen auf seine Größe, weisen solche Schwungringe eine hohe Schwungmasse auf.

Der Schwungring kann mit der ersten Beschichtung und/oder mit der zweiten Beschichtung stoffschlüssig und/oder formschlüssig verbunden sein. Eine solche stoffschlüssige Verbindung ergibt sich zum Beispiel durch das zuvor beschriebene Anspritzen der Beschichtungen an die Oberfläche des Schwungrings, direkt oder mittels des Bindemittels. Eine formschlüssige Verbindung kann beispielsweise durch Wirbelsintern spezieller Polymere hergestellt werden.

In der Arbeitskammer kann ein Dämpfungsmediums-Reservoir angeordnet sein, wobei das Dämpfungsmediums-Reservoir durch die Innenwand und die von der ersten Beschichtung nicht-überdeckte Oberfläche des Schwungrings oder durch die Innenwand und die zweite Beschichtung begrenzt ist. Prinzipiell können das erforderliche Reservoir und die Schmiermitteltaschen individuell gestaltet und angeordnet sein. Das Reservoir muss jedoch strömungsleitend mit dem Dämpfungsspalt verbunden sein.

Das Dämpfungsmediums-Reservoir hat die Aufgabe, dass Schwankungen in der Befüllung der Arbeitskammer ausgeglichen werden können. Außerdem werden dadurch das Mindest-Füllvolumen und ein temperaturbedingtes Ausdehnen in das Totvolumen gewährleistet

Das Dämpfungsmedium, die zweite Beschichtung und der Dämpfungsspalt bilden gemeinsam eine Temperaturkompensationsvorrichtung, zur temperaturunabhängigen Erzielung stets gleichbleibender Gebrauchseigenschaften des Drehschwingungsdämpfers, wobei die Temperaturkompensationsvorrichtung derart ausgebildet ist, das das Dämpfungsmedium eine Viskosität aufweist, die zweite Beschichtung einen Wärmeausdehnungskoeffizient und der Dämpfungsspalt ein Volumen, wobei die Viskosität, der Wärmeausdehnungskoeffizient und das Volumen zur temperaturunabhängigen Erzielung stets gleichbleibender Gebrauchseigenschaften des Drehschwingungsdämpfers entsprechend korrelieren. Durch eine solche Ausgestaltung wird ein Temperatureinfluss auf die Gebrauchseigenschaften des Drehschwingungsdämpfers im Wesentlichen verhindert. Dämpfungsmedien, insbesondere wenn es sich um Silikonöle handelt, zeigen eine starke Steifigkeitsabnahme mit zunehmender Temperatur. Mit zunehmender Temperatur dehnt sich die zweite Beschichtung in dem Maße aus, wie die Viskosität des Dämpfungsmediums sinkt und die Steifigkeit des Dämpfungsmediums abnimmt. Der Steifigkeitsverlust des Dämpfungsmediums wird dadurch ausgeglichen, dass das Volumen des Dämpfungsspalts verkleinert wird.

Der Einfluss von Temperaturänderungen auf die Gebrauchseigenschaften des Drehschwingungsdämpfers wird dadurch kompensiert.

Fünf Ausführungsbeispiele eines Drehschwingungsdämpfers mit abweichend voneinander gestalteten Schwungringen werden nachfolgend anhand der Figuren 1 bis 6 näher beschrieben.

### Kurzbeschreibung der Zeichnung

Die Figuren 1 bis 6 zeigen jeweils in schematischer Darstellung:
- Fig. 1: ein erstes Ausführungsbeispiel, ohne Temperaturkompensationsvorrichtung, mit besonders einfacher erster Beschichtung,
- Fig. 2: ein zweites Ausführungsbeispiel mit einer ersten Beschichtung, die die Oberfläche des Schwungrings vollständig überdeckt,
- Fig. 3: ein drittes Ausführungsbeispiel eines erfindungsgemäßen Drehschwingungsdämpfers mit Temperaturkompensationsvorrichtung in partieller Zweikomponenten-Beschichtung,
- Fig. 4: ein viertes Ausführungsbeispiel ähnlich, dem Ausführungsbeispiel aus Fig.1, bei dem die erste Beschichtung radial innenseitig Schmiermitteltaschen aufweist,
- Fig. 5: eine perspektivische Darstellung des Schwungrings mit der ersten Beschichtung aus Fig. 4 und
- Fig. 6: eine perspektivische Darstellung eines Schwungrings eines fünften Ausführungsbeispiels mit der ersten Beschichtung aus Fig. 4 mit Schmiermitteltaschen, die keilförmig ausgebildet sind.

### Ausführung der Erfindung

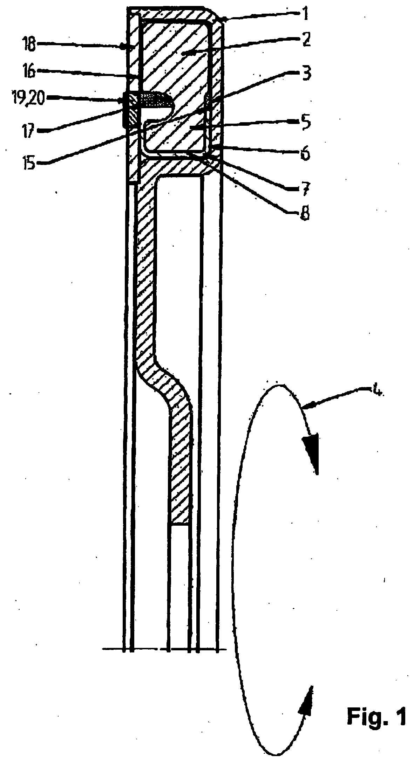

In Fig. 1 ist ein Ausführungsbeispiel eines Drehschwingungsdämpfers gezeigt. Der Schwungring 5 ist radial innenseitig von der ersten Beschichtung 7 klammerförmig umgriffen, wobei die erste Beschichtung 7 durch einen an die Oberfläche 8 des Schwungrings 5 angespritzten polymeren Werkstoff gebildet ist. Durch das Radiallager 9 und die beiden Axiallager 10, 11, die stirnseitig beiderseits des Schwungrings 5 angeordnet sind, stützt sich der Schwungring 5 frei und relativ verdrehbar zum Dämpfergehäuse 1 in der Arbeitskammer 2 ab. Der Dämpfungsspalt 16 wird im hier gezeigten Ausführungsbeispiel von der Oberfläche 8 des Schwungrings 5 und der Innenwand 15 der Arbeitskammer 2 begrenzt.

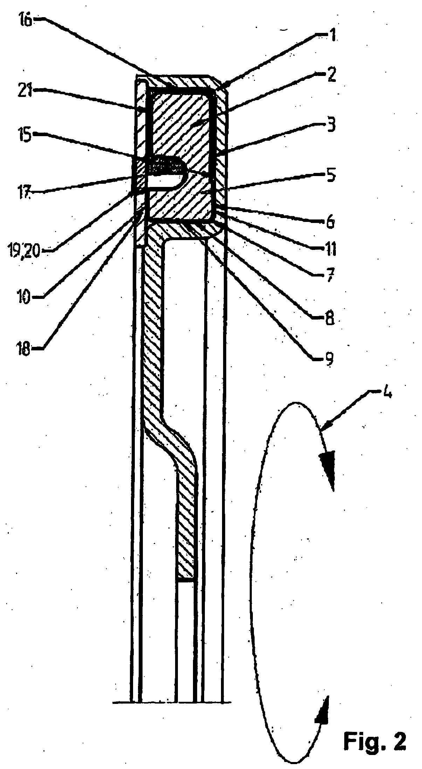

In Figur 2 ist ein Ausführungsbeispiel eines Drehschwingungsdämpfers gezeigt, mit einer ersten Beschichtung 7, ähnlich Fig. 1, aber in einheitlicher Beschichtungsstärke. Die Funktion dieses Drehschwingungsdämpfers unterscheidet sich von der Funktion des Drehschwingungsdämpfers aus Fig. 1 nicht.

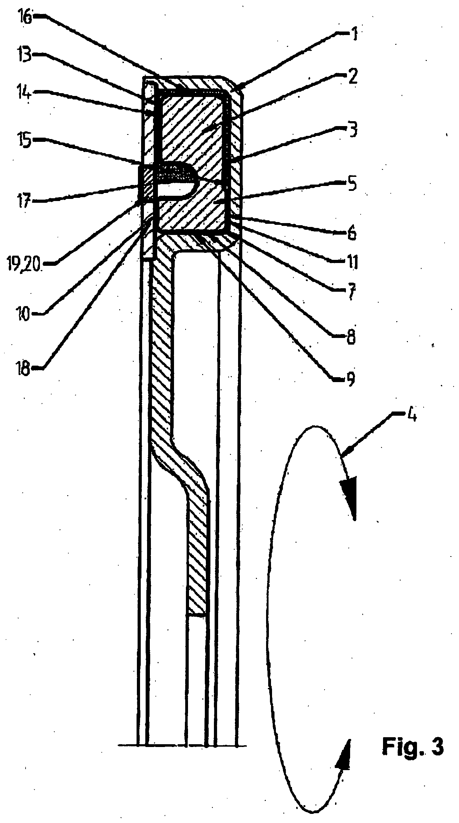

In Fig. 3 ist eine besonders bevorzugte Ausführungsform des erfindungsgemäßen Drehschwingungsdämpfers gezeigt. Der Drehschwingungsdämpfer umfasst ein Dämpfergehäuse 1, das in seinem außenumfangsseitigen Bereich, im Schnitt betrachtet, im Wesentlichen C-förmig in axialer Richtung offen ausgebildet ist. Die in axialer Richtung offene Seite des Dämpfergehäuses 1 ist durch einen Deckel 18 flüssigkeitsdicht verschlossen, wobei der Deckel 18 im Bereich des Dämpfungsmediums-Reservoirs 17 eine durch einen Stopfen 19 flüssigkeitsdicht verschlossene Durchbrechung 20 zur Befüllung der Arbeitskammer 2 mit Dämpfungsmedium 3 aufweist. Die ringkanalförmige Arbeitskammer 2 ist mit dem viskosen Dämpfungsmedium 3 gefüllt, das im hier gezeigten Ausführungsbeispiel aus einem Silikonöl besteht Der Schwungring 5 ist in Umfangsrichtung 4 frei beweglich in der Arbeitskammer 2 angeordnet und ist durch die als Gleitlager 6 ausgebildete erste Beschichtung 7 in der Arbeitskammer 2 gegenüber dem Dämpfergehäuse 1 gelagert.

Die erste Beschichtung 7 umschließt nur radial innen die Oberfläche 8 des Schwungrings 5 im Wesentlichen klammerförmig und bildet dadurch radial innen das Radiallager 9 und in axialer Richtung beiderseits die Axiallager 10, 11.

Das Radiatlager 9 ist innenumfangsseitig mit zwölf gleichmäßig in Umfangsrichtung 4 verteilt angeordneten Schmiermitteltaschen 12.1, ...12.12 ausgebildet, die sich in axialer Richtung von einer Stirnseite des Schwungrings 5 zu dessen anderer Stirnseite erstrecken.

Insofern ist das Radiallager 9 - wie das Radiallager 9 des dritten Ausführungsbeispiels aus Fig. 3 - ausgebildet.

Der Drehschwingungsdämpfer weist eine Temperaturkompensationsvorrichtung auf. Die Temperaturkompensationsvorrichtung ist durch das Dämpfungsmedium 3, die zweite Beschichtung 13 und den Dämpfungsspalt 16 gebildet, wobei sich die genannten Merkmale der Temperaturkompensationsvorrichtung gegenseitig derart beeinflussen, dass der Drehschwingungsdämpfer temperaturunabhängig stets gleichbleibende Gebrauchseigenschaften aufweist.

Steigt während der bestimmungsgemäßen Verwendung des Drehschwingungsdämpfers die Temperatur des Dämpfungsmediums 3, sinkt dessen Viskosität; das Dämpfungsmedium 3 wird mit zunehmender Temperatur fließfähiger.

### Dadurch würden sich die Gebrauchseigenschaften des

Drehschwingungsdämpfers ändern, wenn sich nicht mit zunehmender Temperatur die zweite Beschichtung 13 ausdehnen und das Volumen des Dämpfungsspalts 16 deshalb kleiner werden würde. Die abnehmende Viskosität des Dämpfungsmediums 3 und die wärmebedingte Ausdehnung der zweiten Beschichtung 13 in Verbindung mit dem deshalb reduzierten Volumen des Dämpfungsspalts 16 ergänzen sich derart, dass der erfindungsgemäße Drehschwingungsdämpfer temperaturunabhängig stets gleichbleibende Gebrauchseigenschaften aufweist.

Die zweite Beschichtung 13 überdeckt im hier gezeigten Ausführungsbeispiel die von der ersten Beschichtung 7 nicht-überdeckte Oberfläche 8 des Schwungrings 5, so dass die erste Beschichtung 7 und die zweite Beschichtung 13 gemeinsam eine vollständige Ummantelung 14 des Schwungrings 5 bilden.

Die erste Beschichtung 7 und die zweite Beschichtung 13 bestehen in dem hier gezeigten Ausführungsbeispiel aus einem gleitfähigen polymeren Werkstoff, wie Beispielsweise PTFE, PA 66 oder POM und sind einstückig ineinander übergehend ausgebildet. Der Dämpfungsspalt 16 erstreckt sich zwischen der zweiten Beschichtung 13 und der benachbarten Innenwand 15 der Arbeitskammer 2.

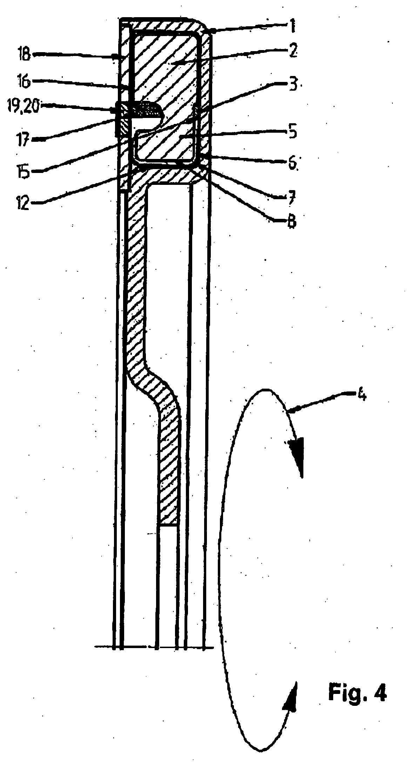

In Fig. 4 ist ein weiteres Ausführungsbeispiel eines Drehschwingungsdämpfers gezeigt, das sich vom Ausführungsbeispiel des Drehschwingungsdämpfers aus Fig. 1 dadurch unterscheidet, dass das Radiallager 9 und die Axiallager 10, 11 der ersten Beschichtung 7 zwölf gleichmäßig in Umfangsrichtung verteilt angeordnete Schmiermitteltaschen 12.1, ..., 12.12 aufweisen, die sich von einer Stirnseite des Schwungrings 5 zur anderen Stirnseite erstrecken. Die Schmiermitteltaschen 12.1, ..., 12.12 sind mit dem Dämpfungsmedium 3 gefüllt, so dass die Reibung und eine unerwünscht große Erwärmung im Bereich der Lagerstellen reduziert sind.

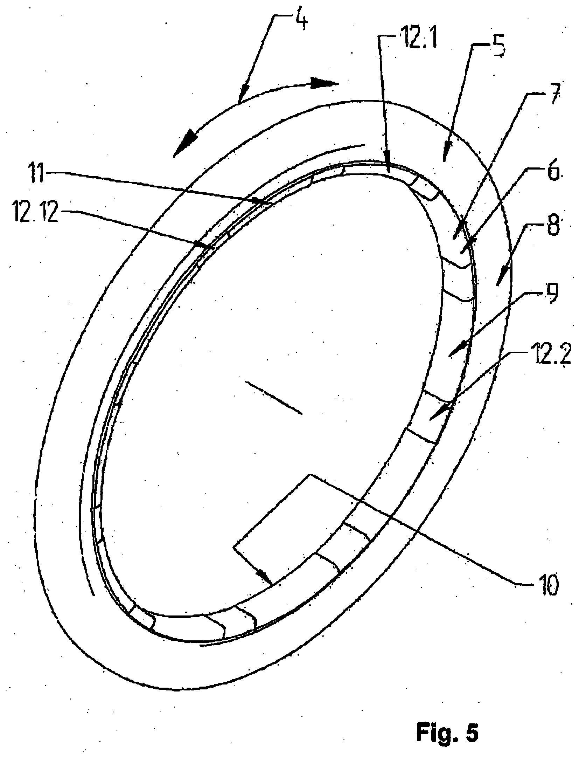

In Fig. 5 ist der mit der ersten Beschichtung 7 versehene Schwungring 5 des dritten Ausführungsbeispiels aus Fig. 3 in einer perspektivischen Ansicht gezeigt. Die Schmiermitteltaschen 12.1, ..., 12.12 des Radiallagers 9 und der Axiallager 10, 11 sind hier zu erkennen.

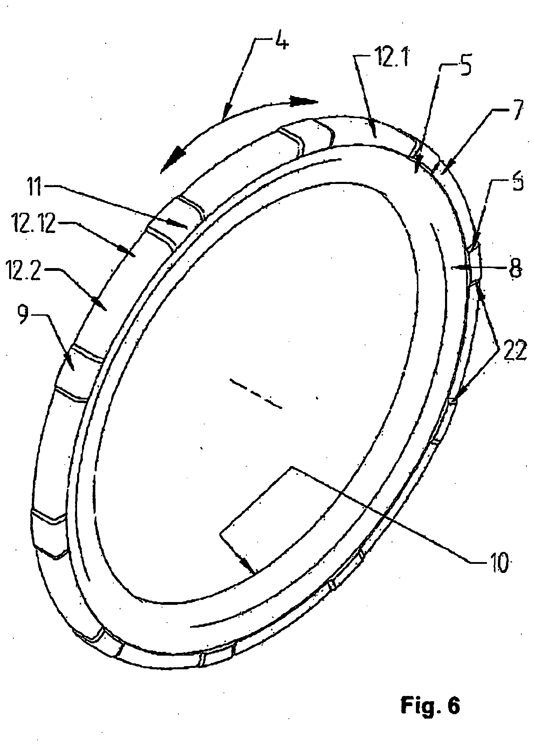

In Fig. 6 ist eine perspektivische Darstellung eines Schwungrings 5 eines weiteren Ausführungsbeispiels gezeigt, mit der ersten Beschichtung 7 aus Fig.4 mit Schmiermitteltaschen 12.1, ..., 12.12, die keilförmig ausgebildet sind.

Mit der Bezugsziffer 21 ist die vollständige Ummantelung des Schwungrings 5 mit der ersten Beschichtung 7 bezeichnet.

Die Bezugsziffer 22 bezeichnet eine über den Umfang 4 abgeschrägte Gleitlage, die im Betriebszustand eine Selbstzentrierung bewirkt.

## Patentansprüche

1. Drehschwingungsdämpfer, umfassend
ein Dämpfergehäuse (1) mit einer ringkanalförmigen Arbeitskammer (2), die mit einem viskosen Dämpfungsmedium (3) gefüllt ist,
wobei in der Arbeitskammer (2) ein in Umfangsrichtung (4) frei beweglicher Schwungring (5) angeordnet ist,
wobei der Schwungring (5) durch zumindest ein Gleitlager (6) in der Arbeitskammer (2) gelagert ist,
wobei das Gteitlager (6) durch eine erste Beschichtung (7) des Schwungrings (5) gebildet ist, die dessen Oberfläche (8) zumindest teilweise überdeckt, **dadurch gekennzeichnet, dass**
die von der ersten Beschichtung (7) nicht-überdeckte Oberfläche (8) von einer zweiten Beschichtung (13) überdeckt ist,
wobei die zweite Beschichtung (13) in sehr viel stärkerem Maße als das Material, aus dem der Schwungring (5) besteht, temperaturabhängig ihr Volumen verändert,
wobei die von der ersten Beschichtung (7) nicht-überdeckte Oberfläche (8) oder die zweite Beschichtung (13) mit einer die Arbeitskammer (2) begrenzenden Innenwand (15) des Dämpfergehäuses (1) einen mit dem Dämpfungsmedium (3) gefüllten Dämpfungsspalt (16) begrenzen,
wobei das Dämpfungsmedium (3), die zweite Beschichtung (13) und der Dämpfungsspalt (16) gemeinsam eine Temperaturkompensationsvorrichtung bilden, zur temperaturunabhängigen Erzielung stets gleichbleibender Gebrauchseigenschaften des Drehschwingungsdämpfers,
wobei die Temperaturkompensationsvorrichtung derart ausgebildet ist, dass das Dämpfungsmedium (3) eine Viskosität aufweist, die zweite Beschichtung (13) einen Wärmeausdehnungskoeffizient und der Dämpfungsspalt (16) ein Volumen und
wobei die Viskosität, der Wärmeausdehnungskoeffizient und das Volumen zur temperaturunabhängigen Erzielung stets gleichbleibender Gebrauchseigenschaften des Drehschwingungsdämpfers entsprechend korrelieren.

2. Drehschwingungsdämpfer nach Anspruch 1, **dadurch gekennzeichnet, dass** die erste Beschichtung (7) den Schwungring (5) zumindest radial innen und in axialer Richtung beiderseits im Wesentlichen klammerförmig umschließt.

3. Drehschwingungsdämpfer nach einem der Ansprüche 1 oder 2, **dadurch gekennzeichnet, dass** die erste Beschichtung (7) radial innen als Radiallager (9) und in axialer Richtung beiderseits jeweils als Axiallager (10, 11) ausgebildet ist.

4. Drehschwingungsdämpfer nach Anspruch 3, **dadurch gekennzeichnet, dass** das Radiallager (9) und die Axiallager (10, 11) einstückig ineinander übergehend und materialeinheitlich ausgebildet sind.

5. Drehschwingungsdämpfer nach einem der Ansprüche 3 oder 4, **dadurch gekennzeichnet, dass** das Radiallager (9) und/oder die Axiallager (10, 11) der ersten Beschichtung (7) jeweils zumindest eine Schmiermitteltasche (12.1, ...) aufweisen.

6. Drehschwingungsdämpfer nach einem der Ansprüche 3 bis 5, **dadurch gekennzeichnet, dass** das Radiallager (9) und/oder die Axiallager (10, 11) jeweils mehrere gleichmäßig in Umfangsrichtung (4) verteilt angeordnete Schmiermitteltaschen (12.1, 12.2, 12.3, ...) aufweisen, die sich in axialer Richtung über die gesamte axiale Breite der ersten Beschichtung (7) erstrecken.

7. Drehschwingungsdämpfer nach einem der Ansprüche 1 bis 6, **dadurch gekennzeichnet, dass** die erste (7) und die zweite Beschichtung (13) gemeinsam eine vollständige Ummantelung (14) des Schwungrings (5) bilden.

8. Drehschwingungsdämpfer nach einem der Ansprüche 1 bis 7, **dadurch gekennzeichnet, dass** die erste (7) und die zweite Beschichtung (13) einstückig ineinander übergehend und materialeinheitlich ausgebildet sind.

9. Drehschwingungsdämpfer nach einem der Ansprüche 1 bis 8, **dadurch gekennzeichnet, dass** die erste (7) und die zweite Beschichtung (13) aus polymeren Werkstoffen bestehen.

10. Drehschwingungsdämpfer nach einem der Ansprüche 1 bis 9, **dadurch gekennzeichnet, dass** die erste (7) und/oder die zweite Beschichtung (13) den Schwungring (5) unmittelbar anliegend umschließen.

11. Drehschwingungsdämpfer nach einem der Ansprüche 1 bis 9, **dadurch gekennzeichnet, dass** die erste (7) und/oder die zweite Beschichtung (13) mit dem Schwungring (5) mittels eines Bindemittels verbunden sind.

12. Drehschwingungsdämpfer nach einem der Ansprüche 1 bis 11, **dadurch gekennzeichnet, dass** der Schwungring (5) aus einem metallischen Werkstoff besteht.

13. Drehschwingungsdämpfer nach einem der Ansprüche 1 bis 12, **dadurch gekennzeichnet, dass** der Schwungring (5) mit der ersten Beschichtung (7) und/oder mit der zweiten Beschichtung (13) stoffschlüssig und/oder formschlüssig verbunden ist.

14. Drehschwingungsdämpfer nach einem der Ansprüche 1 bis 13, **dadurch gekennzeichnet, dass** in der Arbeitskammer (2) ein Dämpfungsmediums-Reservoir (17) angeordnet ist und dass das Dämpfungsmediums-Reservoir (17) durch die Innenwand (15) und die von der ersten Beschichtung (7) nicht-überdeckte Oberfläche (8) des Schwungrings (5) oder durch die Innenwand (15) und die zweite Beschichtung (13) begrenzt ist.

## Claims

1. A torsional damper, comprising
a damper housing (1) with ring-channel-shaped working chamber (2) filled with a viscous damping medium (3),
wherein an inertia ring (5) that is freely movable in the circumferential direction (4) is disposed in the working chamber (2),
wherein the inertia ring (5) is supported by at least one plain bearing (6) in the working chamber (2),
wherein the plain bearing (6) is formed by a first coating (7) of the inertia ring (5) that at least partially covers the surface (8) thereof, **characterized in that**
the surface (8) not covered by the first coating (7) is covered by a second coating (13),
wherein the second coating (13) changes its volume depending on the temperature to a much higher degree than the material of which the inertia ring (5) is made,
wherein the surface (8) not covered by the first coating (7) or the second coating (13), with an inner wall (15) of the damper housing (1) delimiting the working chamber (2), delimit a damping gap (16) filled with the damping medium (3),
wherein the damping medium (3), the second coating (13) and the damping gap (16) together form a temperature compensation device in order to obtain, in a temperature-independent manner, always constant performance characteristics of the torsional damper,
wherein the temperature compensation device is configured in such a way that the damping medium (3) has a viscosity, the second coating (13) has a heat expansion coefficient and the damping gap (16) has a volume, and
wherein the viscosity, the heat expansion coefficient and the volume correlate correspondingly in order to obtain, in a temperature-independent manner, always constant performance characteristics of the torsional damper.

2. The torsional damper according to claim 1, **characterized in that** the first coating (7) surrounds the inertia ring (5) at least on the inside in the radial direction and on both sides in the axial direction in a substantially bracket-like manner.

3. The torsional damper according to any one of the claims 1 or 2, **characterized in that** the first coating (7) is formed as a radial bearing (9) on the inside in the radial direction and as an axial bearing (10, 11) on both sides, respectively, in the axial direction.

4. The torsional damper according to claim 3, **characterized in that** the radial bearing (9) and the axial bearings (10, 11) are configured so as to integrally merge into each other and be made of the same material.

5. The torsional damper according to any one of the claims 3 or 4, **characterized in that** the radial bearing (9) and/or the axial bearings (10, 11) of the first coating (7) each have at least one lubricant pocket (12.1, ...).

6. The torsional damper according to any one of the claims 3 or 5, **characterized in that** the radial bearing (9) and/or the axial bearings (10, 11) each have several lubricant pockets (12.1, 12.2, 12.3, ...), which are disposed evenly distributed in the circumferential direction (4) and which extend in the axial direction over the entire axial width of the first coating (7).

7. The torsional damper according to any one of the claims 1 to 6, **characterized in that** the first (7) and second coatings (13) together form a complete casing (14) of the inertia ring (5).

8. The torsional damper according to any one of the claims 1 to 7, **characterized in that** the first (7) and second coatings (13) are configured so as to integrally merge into each other and be made of the same material.

9. The torsional damper according to any one of the claims 1 to 8, **characterized in that** the first (7) and second coatings (13) are made of polymer materials.

10. The torsional damper according to any one of the claims 1 to 9, **characterized in that** the first (7) and/or second coatings (13) enclose the inertia ring (5) in a directly adjoining manner.

11. The torsional damper according to any one of the claims 1 to 9, **characterized in that** the first (7) and/or second coatings (13) are connected to the inertia ring (5) by means of a binding agent.

12. The torsional damper according to any one of the claims 1 to 11, **characterized in that** the inertia ring (5) is made of a metallic material.

13. The torsional damper according to any one of the claims 1 to 12, **characterized in that** the inertia ring (5) is connected to the first coating (7) and/or the second coating (13) by means of a substance-to-substance connection or by positive fit.

14. The torsional damper according to any one of the claims 1 to 13, **characterized in that** a damping medium reservoir (17) is disposed in the working chamber (2) and that the damping medium reservoir (17) is delimited by the inner wall (15) and the surface (8) of the inertia ring (5) not covered by the first coating (7) or by the inner wall (15) and the second coating (13).

## Revendications

1. Amortisseur d'oscillations de torsion, comprenant
un boîtier d'amortisseur (1) avec une chambre de travail (2) en forme de canal annulaire, qui est remplie avec un milieu d'amortissement visqueux (3),
dans lequel une bague d'inertie (5) librement mobile en direction périphérique (4) est agencée dans la chambre de travail (2),
dans lequel la bague d'inertie (5) est montée via au moins un palier à coulissement (6) dans la chambre de travail (2),
dans lequel le palier à coulissement (6) est formé par un premier revêtement (7) de la bague d'inertie (5), qui recouvre au moins partiellement sa surface (8),
**caractérisé en ce que**
la surface (8) qui n'est pas recouverte par le premier revêtement (7) est recouverte par un second revêtement (13),
dans lequel le second revêtement (13) présente un volume qui varie en fonction de la température, dans une mesure beaucoup plus importante que le matériau duquel est fait la bague d'inertie (5),
dans lequel la surface (8) qui n'est pas recouverte par le premier revêtement (7) ou bien le second revêtement (13) délimite, avec une paroi intérieure (15), du boîtier d'amortisseur (1), qui délimite la chambre de travail (2), une fente d'amortissement (16) remplie avec le milieu d'amortissement (3),
dans lequel le milieu d'amortissement (3), le second revêtement (13) et la fente d'amortissement (16) forment conjointement un dispositif de compensation de température, pour atteindre des propriétés d'utilisation toujours constantes indépendamment de la température de l'amortisseur d'oscillations de torsion,
dans lequel le dispositif de compensation de température est réalisé de telle manière que le milieu d'amortissement (3) présente une viscosité, le second revêtement (13) présente un coefficient de dilatation thermique, et la fente d'amortissement (16) présente un volume, et
dans lequel la viscosité, le coefficient de dilatation thermique et le volume sont en corrélation correspondante pour atteindre des propriétés d'utilisation toujours constantes indépendamment de la température de l'amortisseur d'oscillations de torsion.

2. Amortisseur d'oscillations de torsion selon la revendication 1, **caractérisé en ce que** le premier revêtement (7) entoure la bague d'inertie (5) au moins radialement à l'intérieur et en direction axiale sur les deux côtés et sensiblement à la manière d'une pince.

3. Amortisseur d'oscillations de torsion selon l'une des revendications 1 ou 2, **caractérisé en ce que** le premier revêtement (7) est réalisé radialement à l'intérieur sous forme de palier radial (9), et en direction axiale sur les deux côtés respectivement sous forme de palier axial (10, 11).

4. Amortisseur d'oscillations de torsion selon la revendication 3, **caractérisé en ce que** le palier radial (9) et les paliers axiaux (10, 11) sont réalisés d'une seule pièce de manière à se fondre les uns dans les autres et d'un matériau unitaire.

5. Amortisseur d'oscillations de torsion selon l'une des revendications 3 ou 4, **caractérisé en ce que** le palier radial (9) et/ou les paliers axiaux (10, 11) du premier revêtement (7) comprennent respectivement au moins une poche pour agent de lubrification (12.1, ...).

6. Amortisseur d'oscillations de torsion selon l'une des revendications 3 à 5, **caractérisé en ce que** le palier radial (9) et/ou les paliers axiaux (10, 11) comprennent chacun plusieurs poches pour agent de lubrification (12.1, 12.2, 12.3, ...) agencées réparties de manière régulière en direction périphérique (4), qui s'étendent en direction axiale sur la totalité de la largeur axiale du premier revêtement (7).

7. Amortisseur d'oscillations de torsion selon l'une des revendications 1 à 6, **caractérisé en ce que** le premier revêtement (7) et le second revêtement (13) forment conjointement un enrobage complet (14) de la bague d'inertie (5).

8. Amortisseur d'oscillations de torsion selon l'une des revendications 1 à 7, **caractérisé en ce que** le premier revêtement (7) et le second revêtement (13) sont réalisés d'une seule pièce de manière à se fondre l'un dans l'autre et d'un matériau unitaire.

9. Amortisseur d'oscillations de torsion selon l'une des revendications 1 à 8, **caractérisé en ce que** le premier revêtement (7) et le second revêtement (13) sont en matériau polymère.

10. Amortisseur d'oscillations de torsion selon l'une des revendications 1 à 9, **caractérisé en ce que** le premier revêtement (7) et/ou le second revêtement (13) entoure la bague d'inertie (5) en contact direct.

11. Amortisseur d'oscillations de torsion selon l'une des revendications 1 à 9, **caractérisé en ce que** le premier revêtement (7) et/ou le second revêtement (13) sont reliés avec la bague d'inertie (5) au moyen d'un liant.

12. Amortisseur d'oscillations de torsion selon l'une des revendications 1 à 11, **caractérisé en ce que** la bague d'inertie (5) est en un matériau métallique.

13. Amortisseur d'oscillations de torsion selon l'une des revendications 1 à 12, **caractérisé en ce que** la bague d'inertie (5) est reliée avec le premier revêtement (7) et/ou avec le second revêtement (13) par coopération de matières et/ou par coopération de formes.

14. Amortisseur d'oscillations de torsion selon l'une des revendications 1 à 13, **caractérisé en ce qu'**un réservoir de milieu d'amortissement (17) est agencé dans la chambre de travail (2), et **en ce que** le réservoir de milieu d'amortissement (17) est délimité par la paroi intérieure (15) et par la surface (8), de la bague d'inertie (5), qui n'est pas recouverte par le premier revêtement (7), ou par la paroi intérieure (15) et par le second revêtement (13).
